# EUROPÄISCHE PATENTSCHRIFT

(11) **EP 3 247 607 B1**
(45) Veröffentlichungstag und Bekanntmachung des Hinweises auf die Patenterteilung: **23.06.2021**
(21) Anmeldenummer: 16720373.6
(22) Anmeldetag: 20.04.2016
(51) Int. Cl.: B61D 17/02

(54) **AERODYNAMISCHES HILFSMITTEL FÜR EIN SCHIENENFAHRZEUG**
AERODYNAMIC AUXILIARY MEANS FOR A RAIL VEHICLE
ACCESSOIRE AÉRODYNAMIQUE POUR VÉHICULE SUR RAILS

(30) Priorität: 21.04.2015 AT 503132015
(43) Veröffentlichungstag der Anmeldung: 29.11.2017
(73) Patentinhaber: Siemens Mobility Austria GmbH, 1210 Wien (AT)
(72) Erfinder: KLOPSCH, Christian, 1230 Wien (AT); PLINNINGER, Thomas, 83026 Rosenheim (DE)
(74) Vertreter: Deffner, Rolf
(86) Internationale Anmeldenummer: PCT/EP2016/058707
(87) Internationale Veröffentlichungsnummer: WO 2016/169954

(56) Entgegenhaltungen:
- EP-A1- 0 024 554
- EP-A2- 0 376 351
- DE-A1- 2 139 496
- DE-A1- 3 936 645
- US-A- 4 170 377

## Beschreibung

### Technisches Gebiet

Die Erfindung betrifft ein aerodynamisches Hilfsmittel für ein Schienenfahrzeug.

### Stand der Technik

Die aerodynamischen Eigenschaften von Schienenfahrzeugen sind insbesondere bei höheren Geschwindigkeiten von Bedeutung, da sie die Lärmentwicklung und den Energieverbrauch beeinflussen. Ebenso werden durch ungünstige aerodynamische Eigenschaften Luftverwirbelungen hervorgerufen, die bei einer Bahnhofsdurchfahrt mit hoher Geschwindigkeit für am Bahnsteig aufhältige Personen gefährlich sein können. Aufgrund von baulichen Gegebenheiten (Bogenradius der Gleise, Tunnelquerschnitt usw.) und Fahrzeuganforderungen (Sitzplatzanzahl und Kuppelvorgänge) können Bug und Heck bei Zügen nicht beliebig lang und spitz (also aerodynamisch schlank) gestaltet, sondern müssen als aerodynamisch stumpfe Körper ausgeführt werden. Für eine optimale Aerodynamik bei stumpfen Körpern (niedriger Luftwiderstand, geringe Bugwelle, begrenzter Nachlaufwirbel) müsste die Kontur auf eine Anströmrichtung (Fahrtrichtung) mit unterschiedlicher Formgebung für Bug und Heck ausgelegt werden, was im Automobilbereich auch ausgeführt wird. Da die Fahrzeuge im Bahnbereich jedoch in beide Richtungen verkehren, ist eine individuelle aerodynamische Anpassung der Zugsenden nicht möglich. Es wird daher eine identische Form für Bug und Heck angestrebt, die für beide Fahrtrichtungen gangbar ist. Eine Möglichkeit die aerodynamische Eigenschaft des Zuges bei identischer Bug- und Heckform zu verbessern wäre die Verwendung von aerodynamischen Hilfsmitteln (Anbauten). Die Anbringung eines Spoilers am Zugende bewirkt eine Strömungsablösung an dieser Stelle, welche die schädlichen Nachlaufwirbel begrenzt. Die Installation eines solchen Spoilers am Bug wäre jedoch für die aerodynamische Eigenschaft des Zuges nachteilig. Ein solches aerodynamische Hilfsmittel müsste daher je nach Fahrtrichtung wechselnd angebracht werden, was im Bahnbetriebsablauf unzumutbar ist. Allerdings könnte auch eine automatische, kraftunterstützte Ausrichtung der aerodynamischen Hilfsmittel erfolgen, was jedoch sehr aufwendig und kostenintensiv ist und keinesfalls wirtschaftlich.

Aerodynamische Hilfsmittel für Schienenfahrzeuge oder Fahrzeuge sind zum Beispiel aus EP 0 024 554 A1 bzw. US 4 170 377 A bekannt.

### Darstellung der Erfindung

Der Erfindung liegt daher die Aufgabe zugrunde, ein aerodynamisches Hilfsmittel für ein Schienenfahrzeug anzugeben, welches bei einer Fahrt in eine Richtung eine Strömungsabrisskante bildet und bei Fahrt in entgegengesetzter Richtung die aerodynamischen Eigenschaften des Schienenfahrzeugs nur sehr gering beeinflusst.

Die Aufgabe wird durch ein aerodynamisches Hilfsmittel mit den Merkmalen des Anspruchs 1 gelöst. Vorteilhafte Ausgestaltungen sind Gegenstand untergeordneter Ansprüche. Dem Grundgedanken der Erfindung nach wird ein aerodynamisches Hilfsmittel für ein Schienenfahrzeug aufgebaut, welches mindestens eine Strömungsklappe umfasst, welche um eine Drehachse zwischen zwei Endlagen schwenkbar angeordnet ist, wobei die Bewegung zwischen den Endlagen ausschließlich durch die Kraftwirkung der anströmenden Luft bewirkbar ist, und wobei die Strömungsklappe in einer ersten Endlage eine Strömungsabrißkante bildet, und wobei die Strömungsklappe in einer zweiten Endlage die anströmende Luft im Wesentlichen unbeeinflusst belässt.

Dadurch ist der Vorteil erzielbar, in Abhängigkeit von der Lage der Strömungsklappe jeweils unterschiedliche aerodynamische Eigenschaften bewirken zu können, ohne dass dazu ein manueller Bedieneingriff oder ein Kraftantrieb erforderlich ist. Alleine die anströmende Luft bewirkt durch ihre auf die Strömungsklappe einwirkende Kraft eine entsprechende Bewegung der Strömungsklappe zwischen ihren beiden Endlagen.

Dabei ist die Strömungsklappe in ihrer ersten Endlage so ausgerichtet, dass sie eine Strömungsabrißkante bildet und somit die energieverzehrende Nachlaufwirbelbildung reduziert. Dazu weist die Strömungsklappe einen bestimmten Winkel zu der anströmenden Luft auf, welcher geeignet ist diesen Effekt zu bewirken. Konkrete Werte dieses Winkels sind auf den konkreten Einsatzfall abzustimmen.

In ihrer zweiten Endlage ist die Strömungsklappe zu ausgerichtet, dass sie die anströmende Luft möglichst nicht beeinflusst.

Erfindungsgemäß erfolgt eine Bewegung der Strömungsklappe zwischen ihren Endlagen durch die Kraftwirkung der anströmenden Luft. Dazu ist es erforderlich, die Strömungsklappe und die die Endlagen definierenden Anschläge so zu bemessen, dass diese Kraftwirkung erfolgen kann. Um eine Kraftwirkung auf die Strömungsklappe zu gewährleisten, muß eine ausreichend große Angriffsfläche an der Strömungsklappe in ihren Endlagen vorgesehen sein. Dies ist insbesondere in der zweiten Endlage, in welcher die Strömungsklappe die Luft möglichst unbeeinflusst belassen soll relevant, da dabei ein Kompromiss zwischen einer ausreichenden Angriffsfläche und der geringstmöglichen Störung der Luftströmung zu finden ist. Diese Optimierungen erfolgen im Anwendungsfall in Abhängigkeit von der gewünschten Wirkungsstärke des aerodynamischen Hilfsmittels und der gewünschten Luftgeschwindigkeit zur Bewegung zwischen den Endlagen.

Dabei wird meist zur Bewegung aus der ersten in die zweite Endlage eine deutlich geringere Strömungsgeschwindigkeit (und damit Fahrgeschwindigkeit) erforderlich sein als zur Bewegung von der zweiten in die erste Endlage.

Erfindungsgemäß ist mindestens eine Strömungsklappe vorgesehen, welche um eine Drehachse zwischen zwei Endlagen schwenkbar angeordnet ist. Die Strömungsklappe kann auch in mehrere Segmente geteilt sein, welche jedes für sich um eine gemeinsame Drehachse oder mehrere separate Drehachsen schwenkbar ist.

Das aerodynamische Hilfsmittel ist vorzugsweise an einem Dach eines Schienenfahrzeugs, beispielsweise einer Lokomotive oder einem Steuerwagen anzuordnen. Diese Anordnung erfolgt an jener Stelle, die für eine bestimmte geometrische Form des Schienenfahrzeugs und die häufigst genutzte Fahrgeschwindigkeit die jeweils optimale Wirkung erwarten lässt. Diese Wirkung kann durch mathematisch-numerische Simulation der Strömungsverhältnisse ermittelt werden und dabei die konkreten Parameter (z.B. Montageort, Anstellwinkel und Abmessungen der Strömungsabrißkante, etc.) des aerodynamischen Hilfsmittel bestimmt werden.

Es ist besonders vorteilhaft, das erfinderische aerodynamische Hilfsmittel zur Nachrüstung bestehender Schienenfahrzeuge einsetzen zu können. Da keinerlei Bedieneingriffe während des Betriebs erforderlich sind und auch keinerlei (elektrische, pneumatische, etc.) Leitungen zu dem aerodynamischen Hilfsmittel zu führen sind, kann dieses auch nachgerüstet werden. Dazu sind allenfalls geeignete Befestigungseinrichtungen vorzusehen.

Die Anordnung erfolgt im stirnseitigen Dachbereich und das aerodynamische Hilfsmittel kann so dimensioniert werden, das es den optischen Eindruck eines Schienenfahrzeugs nicht beeinträchtigt.

### Kurzbeschreibung der Zeichnungen

Es zeigen beispielhaft:
**Fig.1** Aerodynamisches Hilfsmittel für ein Schienenfahrzeug.
**Fig.2** Schienenfahrzeug mit einem aerodynamischen Hilfsmittel, Strömungsklappe in erster Endlage.
**Fig.3** Schienenfahrzeug mit einem aerodynamischen Hilfsmittel, Strömungsklappe in zweiter Endlage.

### Ausführung der Erfindung

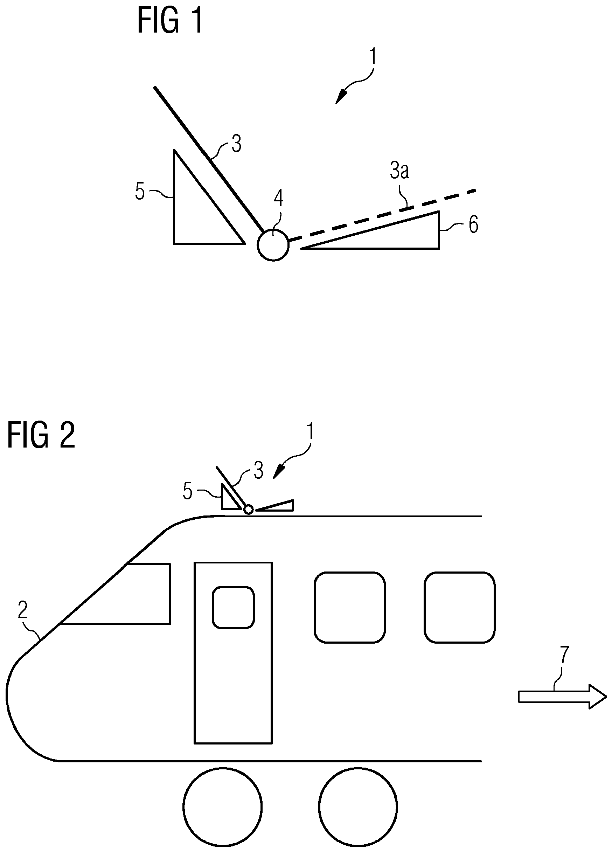

**Fig.1** zeigt beispielhaft und schematisch aerodynamisches Hilfsmittel für ein Schienenfahrzeug. Es ist ein Schnitt durch ein aerodynamisches Hilfsmittel 1 für ein Schienenfahrzeug dargestellt, welches eine um eine Drehachse 4 schwenkbare Strömungsklappe 3 umfasst, welche mittels einem ersten Anschlag 5 und einem zweiten Anschlag 6 zwischen einer ersten Endlage 3 und einer zweiten Endlage 3a schwenkbar gelagert ist. Das aerodynamische Hilfsmittel 1 ist in Einbaulage dargestellt, wobei die Bewegung der Strömungsklappe zwischen erster 3 und zweiter Endlage 3a mittels der Kraftwirkung der anströmenden Luft erfolgt. Der erste Anschlag 5 bewirkt einen steileren Anstellwinkel der Strömungsklappe 3 gegenüber der Luftströmung als der zweite Anschlag 6. Dadurch ist die Luftströmung in zweiter Endlage 3a der Strömungsklappe wesentlich weniger beeinflußt als in erster Endlage 3. Die Luftströmung erfolgt in jedem der beiden Betriebszustände in Richtung der Strömungsklappe 3, d.h. im ersten Betriebszustand mit der Strömungsklappe in Position 3 von rechts, in Position 3a von links.

**Fig.2** zeigt beispielhaft und schematisch ein Schienenfahrzeug mit einem aerodynamischen Hilfsmittel, Strömungsklappe in erster Endlage. Es ist ein Schienenfahrzeug 2 mit einem im stirnseitigen Dachbereich angeordneten aerodynamischen Hilfsmittel 1 dargestellt. Die Fahrtrichtung 7 des Schienenfahrzeugs 2 ist nach rechts dargestellt, das Schienenfahrzeug 2 bildet somit den Zugschluß. Die Luftströmung auf das aerodynamische Hilfsmittel 1 erfolgt dadurch naturgemäß von rechts, wodurch die Strömungsklappe des aerodynamischen Hilfsmittels 1 an dem ersten Anschlag 5 anliegt und somit eine Strömungsabrißkante bildet.

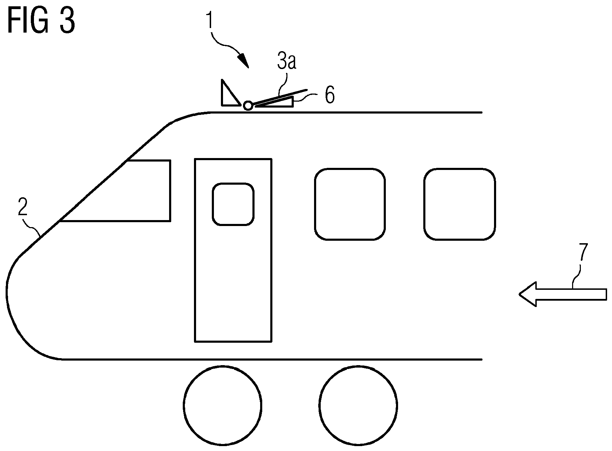

**Fig.3** zeigt beispielhaft und schematisch ein Schienenfahrzeug mit einem aerodynamischen Hilfsmittel, Strömungsklappe in zweiter Endlage. Es ist das Schienenfahrzeug 2 aus Fig.2 bei einer Fahrtrichtung 7 nach links dargestellt. Das Schienenfahrzeug 2 bildet somit die Zugspitze. Die Luftströmung auf das aerodynamische Hilfsmittel 1 erfolgt dadurch naturgemäß von links, wodurch die Strömungsklappe des aerodynamischen Hilfsmittels 1 an dem zweiten Anschlag 6 anliegt und somit die Luftströmung nur sehr gering beeinflusst.

### Liste der Bezeichnungen

- 1: Aerodynamisches Hilfsmittel
- 2: Schienenfahrzeug
- 3: Strömungsklappe
- 3a: Strömungsklappe in zweiter Endlage
- 4: Drehachse
- 5: Erster Anschlag
- 6: Zweiter Anschlag
- 7: Fahrtrichtung

## Patentansprüche

1. Aerodynamisches Hilfsmittel (1) für ein Schienenfahrzeug (2), umfassend mindestens eine, um eine Drehachse (4) schwenkbar angeordnete Strömungsklappe (3, 3a), welche in Abhängigkeit von der Fahrtrichtung (7) des Schienenfahrzeugs (2) zwischen zwei Endlagen schwenkbar angeordnet ist und wobei
- die Strömungsklappe (3, 3a) in einer ersten Endlage eine Strömungsabrißkante bildet, und wobei
- die Strömungsklappe (3, 3a) in einer zweiten Endlage die anströmende Luft im Wesentlichen unbeeinflusst belässt
**dadurch gekennzeichnet, dass** die Bewegung zwischen den Endlagen ausschließlich durch die Kraftwirkung der anströmenden Luft, bewirkbar ist.

2. Aerodynamisches Hilfsmittel (1) für ein Schienenfahrzeug (2) nach Anspruch 1, **dadurch gekennzeichnet, dass** das aerodynamische Hilfsmittel (1) Befestigungseinrichtungen zur Anordnung an einem Schienenfahrzeug (2) umfasst.

3. Aerodynamisches Hilfsmittel (1) für ein Schienenfahrzeug (2) nach einem der Ansprüche 1 oder 2, **dadurch gekennzeichnet, dass** die Strömungsklappe (3, 3a) in ihrer ersten Endlage einen größeren Winkel zu der anströmenden Luft einnimmt als in der zweiten Endlage.

4. Schienenfahrzeug (2), umfassend ein aerodynamisches Hilfsmittel (1) nach einem der Ansprüche 1 bis 3.

5. Schienenfahrzeug (2) nach Anspruch 4, **dadurch gekennzeichnet, dass** die Drehachse von dem aerodynamischem Hilfsmittel (1) in ihrer Einbaulage an einem Schienenfahrzeug (2) normal zur Längsachse des Schienenfahrzeugs (2) orientiert ist.

6. Schienenfahrzeug (2) nach Anspruch 4, **dadurch gekennzeichnet, dass** das aerodynamische Hilfsmittel (1) am Dach in örtlicher Nähe einer Stirnseite des Schienenfahrzeugs (2) angeordnet ist.

## Claims

1. Aerodynamic aid (1) for a rail vehicle (2), comprising at least one flow flap (3, 3a) which is arranged such that it can be pivoted about a rotational axis (4), and is arranged such that it can be pivoted between two end positions in a manner which is dependent on the driving direction (7) of the rail vehicle (2), and
- the flow flap (3, 3a) forming a flow breakaway edge in a first end position, and
- the flow flap (3, 3a) leaving the incident air substantially uninfluenced in a second end position, **characterized in that** the movement between the end positions can be brought about exclusively by way of the action of force of the incident air.

2. Aerodynamic aid (1) for a rail vehicle (2) according to Claim 1, **characterized in that** the aerodynamic aid (1) comprises fastening devices for arranging on a rail vehicle (2) .

3. Aerodynamic aid (1) for a rail vehicle (2) according to either of Claims 1 and 2, **characterized in that** the flow flap (3, 3a) assumes a greater angle with respect to the incident air in its first end position than in the second end position.

4. Rail vehicle (2), comprising an aerodynamic aid (1) according to one of Claims 1 to 3.

5. Rail vehicle (2) according to Claim 4, **characterized in that**, in its installed position on a rail vehicle (2), the rotational axis of the aerodynamic aid (1) is oriented perpendicularly with respect to the longitudinal axis of the rail vehicle (2).

6. Rail vehicle (2) according to Claim 4, **characterized in that** the aerodynamic aid (1) is arranged on the roof in the local vicinity of an end side of the rail vehicle (2).

## Revendications

1. Accessoire aérodynamique (1) pour un véhicule ferroviaire (2), comprenant au moins un volet d'écoulement (3, 3a) disposé pivotant autour d'un axe de rotation (4), qui est agencé de façon à pouvoir pivoter entre deux positions terminales en fonction de la direction de circulation du véhicule ferroviaire (2), et dans lequel
- le volet d'écoulement (3, 3a) forme une arête de décrochage d'écoulement dans une première position terminale, et dans lequel
- le volet d'écoulement (3, 3a) n'exerce sensiblement aucun effet sur l'air affluant dans une seconde position terminale,
**caractérisé en ce que** le mouvement entre les positions terminales peut être engendré uniquement sous l'effet de la force de l'air affluant.

2. Accessoire aérodynamique (1) pour un véhicule ferroviaire (2) selon la revendication 1, **caractérisé en ce que** l'accessoire aérodynamique (1) comprend des dispositifs de fixation pour le monter sur un véhicule ferroviaire (2).

3. Accessoire aérodynamique (1) pour un véhicule ferroviaire (2) selon l'une des revendications 1 ou 2, **caractérisé en ce que** le volet d'écoulement (3, 3a) forme dans sa première position terminale un angle par rapport à l'air affluant plus grand que dans la seconde position terminale.

4. Véhicule ferroviaire (2) comprenant un accessoire aérodynamique (1) selon l'une des revendications 1 à 3.

5. Véhicule ferroviaire (2) selon la revendication 4, **caractérisé en ce que** l'axe de rotation de l'accessoire aérodynamique (1) est orienté dans sa position de montage sur un véhicule ferroviaire (2) perpendiculairement à l'axe longitudinal du véhicule ferroviaire (2).

6. Véhicule ferroviaire (2) selon la revendication 4, **caractérisé en ce que** l'accessoire aérodynamique (1) est disposé sur le toit à proximité locale d'un côté avant du véhicule ferroviaire (2).
